# EUROPEAN PATENT APPLICATION

(11) **EP 4 822 101 A1**
(43) Date of publication of application: **14.10.2026**
(21) Application number: 25745044.5
(22) Date of filing: 20.01.2025
(51) Int. Cl.: E02F 9/20, G05D 1/43, G05D 1/606

(54) **CONTROL DEVICE FOR WORK MACHINE**

(30) Priority: 25.01.2024 JP 2024009634
(71) Applicant: Hitachi Construction Machinery Co., Ltd., Tokyo 110-0015 (JP)
(72) Inventor: SEKINE, Kazuya, Tsuchiura-shi, Ibaraki 300-0013 (JP); MORIKI, Hidekazu, Tsuchiura-shi, Ibaraki 300-0013 (JP)
(74) Representative: Manitz Finsterwald Patent- und Rechtsanwaltspartnerschaft mbB
(86) International application number: PCT/JP2025/001641
(87) International publication number: WO 2025/159060

(57) **Abstract**

To provide a controller for a work machine such as wheel loaders equipped with articulated steering mechanisms, which can stably travel even on slopes. A controller for a work machine that plans a target route, which is a travel route to a target position, and automatically travels following the planned target route. The controller includes a route planning section 120 that plans the target route based on the current position of the work machine and the target position, and the route planning section 120 modifies the target route based on the travel-surface gradient on the target route.

## Description

### Technical Field

The present invention relates to a controller for a work machine.

### Background Art

Conventionally, a work machine that automatically travels to a predetermined position has been proposed. Patent Literature 1 discloses a controller for a wheel loader, which generates a travel route based on the positions and vehicle directions for tasks such as excavation, loading, and turning, and controls the vehicle to follow the generated travel route.

In such automatic travel controllers, the travel route generated is typically selected from a plurality of route candidates that can reach the specified position and vehicle direction, using parameters such as travel distance and distance to obstacles. By doing so, it is possible to select an efficient route with a short travel distance while avoiding contact with obstacles.

### Citation List

### Patent Literature

Patent Literature 1: Japanese Patent Application Publication No. H10-212035

### Summary of Invention

### Technical Problem

According to Patent Literature 1, the positions and vehicle directions for excavation, loading, and turning in the generated travel route are used as teaching data from the positions and vehicle directions when manually operated in advance. Furthermore, the travel route connecting the positions for excavation, loading, and turning is realized by configuring it using a predetermined function. Specifically, a method of depicting a curved road as arcs or clothoid curves is disclosed. This allows for excellent route-following performance and an efficient route with a short travel distance.

On the other hand, the wheel loader is a work machine equipped with an articulated steering mechanism that causes the vehicle body itself to bend, so that the bending angle of the vehicle body constantly changes during travel, and consequently the center of gravity position of the vehicle body also constantly changes. Therefore, if traveling along a generated travel route without considering changes in the bending angle and center of gravity position of the vehicle body, there is a risk that the vehicle body will tilt significantly and its behavior will become unstable.

Especially when traveling on a slope, the effects of changes in the bending angle and center of gravity position of the vehicle body become apparent, so to achieve stable automatic travel, it is necessary to plan the route according to the slope conditions of the road surface being traveled.

There is also technology that constantly monitors the tilt and center of gravity position of the vehicle body during travel, and regenerates (replans) the travel route or stops the vehicle body if the tilt becomes significant and behavior becomes unstable. However, in a work machine equipped with an articulated steering mechanism, where changes in the state of the load in the bucket, which is a work tool, easily cause changes in the center of gravity position of the vehicle body, regenerating (replanning) the travel route can result in changes in the bending angle of the vehicle body and the state of the load, leading to changes in the center of gravity position and further instability in the vehicle body's behavior, or frequent stops due to vehicle body stop control, which can reduce work efficiency. Therefore, as mentioned above, to achieve stable automatic travel, it is necessary to plan a route in advance that makes it difficult for the bending angle and center of gravity position of the vehicle body to change (making it difficult for the vehicle body to tilt) according to the slope conditions of the road surface being traveled.

The present invention has been made in view of the above problems, and aims to provide a controller for a work machine, such as a wheel loader equipped with an articulated steering mechanism, that can stably travel even on slopes.

### Solution to Problem

To achieve the above objective, the controller for a work machine according to the present invention plans a target route, which is the travel route to the target position, and is a controller for a work machine that automatically travels by following the planned target route. The controller includes a route planning section that plans the target route based on the current position of the work machine and the target position, and the route planning section is characterized by modifying the target route based on the travel-surface gradient on the target route.

### Advantageous Effects of Invention

According to the present invention, it is possible to prevent the behavior of the vehicle body from becoming unstable when traveling on a route that includes slopes. It should be noted that issues, configurations, and effects other than those mentioned above will be clarified by the description of the embodiments below.

### Brief Description of Drawings

FIG. 1 is an external view of a work machine according to an embodiment of the present invention.
FIG. 2 is a control system diagram of a work machine according to an embodiment of the present invention.
FIG. 3 is a functional block diagram of an automatic driving controller according to an embodiment of the present invention.
FIG. 4 is a flowchart showing the processing performed by the behavior management section according to an embodiment of the present invention.
FIG. 5 is a flowchart showing the processing performed by the route planning section according to an embodiment of the present invention.
FIG. 6 is a conceptual diagram showing the relationship between the travel-surface gradient vector and the target route.
FIG. 7 is an example of route planning using travel-surface gradient vectors.
FIG. 8 is an example of route planning using the height (elevation difference) of the left and right travel bodies.
FIG. 9 is an example of the transition of the height (elevation difference) of the left and right travel bodies during route travel.

### Description of Embodiments

Below, a wheel loader is given as an example of a work machine according to an embodiment of the present invention, and will be described with reference to the drawings. In each FIG., equivalent members are given the same reference numerals, and redundant descriptions are omitted as appropriate.

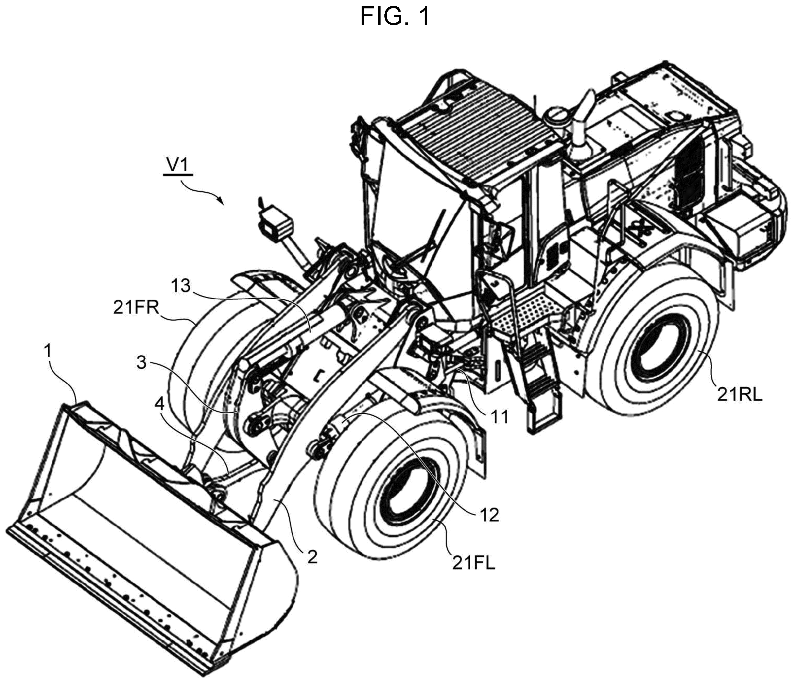

The embodiments of the present invention will be described with reference to FIGS. 1 to 9.

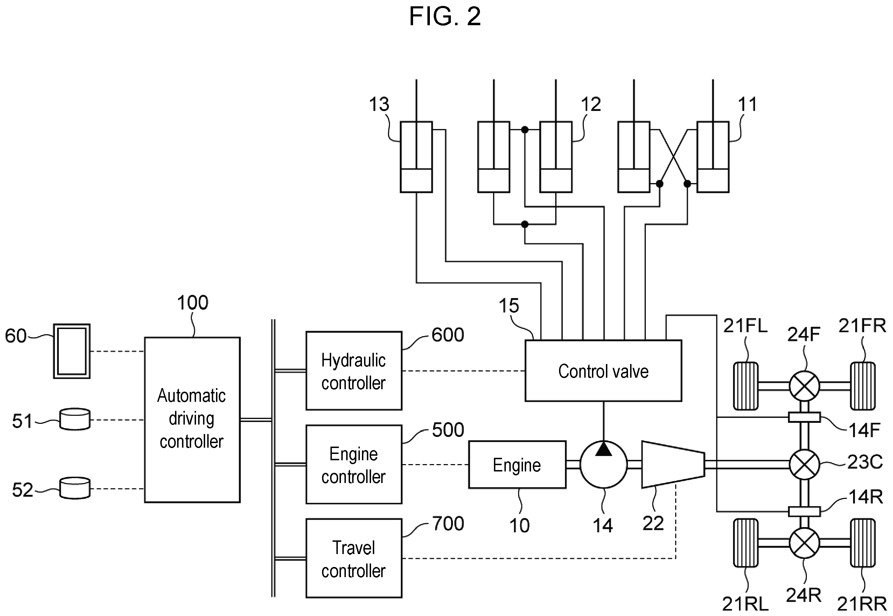

FIG. 1 is a diagram schematically showing the appearance of a wheel loader according to this embodiment, and FIG. 2 is a diagram schematically showing the control system of the wheel loader according to this embodiment.

In FIG. 1, the wheel loader V1 includes a bucket 1, which is a work tool, at the front of the vehicle body, and a lift arm 2 that supports the bucket 1 rotatably. The lift arm 2 is rotatably supported by the wheel loader V1, and the bucket 1 moves up and down as the lift arm 2 rotates. Additionally, the lift arm 2 supports a bell crank 3 rotatably, and when the bell crank 3 rotates, the bucket 1 is also configured to rotate relative to the lift arm 2 via a bucket link 4.

Furthermore, the wheel loader V1 is equipped with a front right tire 21FR, a front left tire 21FL, a rear right tire 21RR (FIG. 2), and a rear left tire 21RL, and travels by driving these tires. It also has an articulated (also called articulated) steering mechanism, which bends the front of the vehicle body relative to the rear of the vehicle body around the vertical axis of the vehicle body, creating an angle difference between the front and rear of the vehicle body to turn.

In FIG. 2, the control system includes an engine 10 as a power source, and the engine 10 drives a hydraulic pump 14 and a drive force transmission device 22. The drive force transmission device 22 transmits the driving force of the engine 10 to the front right tire 21FR, front left tire 21FL, rear right tire 21RR, and rear left tire 21RL via the center joint 23C and the front differential device 24F and rear differential device 24R, accelerating the wheel loader V1.

On the other hand, the hydraulic pump 14 is driven by the engine 10 to supply hydraulic fluid to the control valve 15, and the hydraulic fluid is distributed by the control valve 15 to drive the steering cylinder 11, lift cylinder 12, bucket cylinder 13, and brakes 14F, 14R. The steering cylinder 11, lift cylinder 12, and bucket cylinder 13 extend and retract with the supply of hydraulic fluid, changing the angle between the front and rear of the vehicle body, the angle of the lift arm 2 relative to the front of the vehicle body, and the angle of the bucket 1 (see FIG. 1). Additionally, when the brakes 14F, 14R close with hydraulic fluid, the rotation of the tires 21FR, 21FL, 21RR, and 21RL is suppressed, causing the wheel loader V1 to decelerate and stop.

Furthermore, the control system includes an automatic driving controller 100, engine controller 500, hydraulic controller 600, travel controller 700, user interface 60, positioning device 51, and load measuring device 52. The positioning device 51 acquires information on the current position and vehicle direction (position and direction information) of the wheel loader V1. Here, the vehicle direction of the wheel loader V1 refers to, for example, the direction in which the front of the wheel loader V1 faces when the front and rear of the vehicle body are aligned in a straight line in the longitudinal direction. In this embodiment, the positioning device 51 is a GNSS (Global Navigation Satellite System), but this embodiment is not limited to this, and the positioning device 51 may be configured using known SLAM (Simultaneous Localization and Mapping) with a camera or LiDAR (Light Detection and Ranging). Additionally, the load measuring device 52 is configured to estimate the weight (load weight) of the load in the bucket 1, which is a work tool, based on the posture of the bucket 1 and the pressure of the lift cylinder 12 and bucket cylinder 13. Furthermore, the user interface 60 may be a PC, tablet terminal, smartphone, or any other device that can input work instructions described later.

The automatic driving controller 100 generates engine control signals, hydraulic control signals, and travel control signals based on work instructions from the user interface 60, position and direction information from the positioning device 51, and load information from the load measuring device 52, and sends them to the engine controller 500, hydraulic controller 600, and travel controller 700, respectively. In response to these signals, the engine controller 500 controls the rotation speed of the engine 10, the hydraulic controller 600 controls the opening and closing degree of the control valve 15, and the travel controller 700 controls the gear ratio and rotation direction of the drive force transmission device 22.

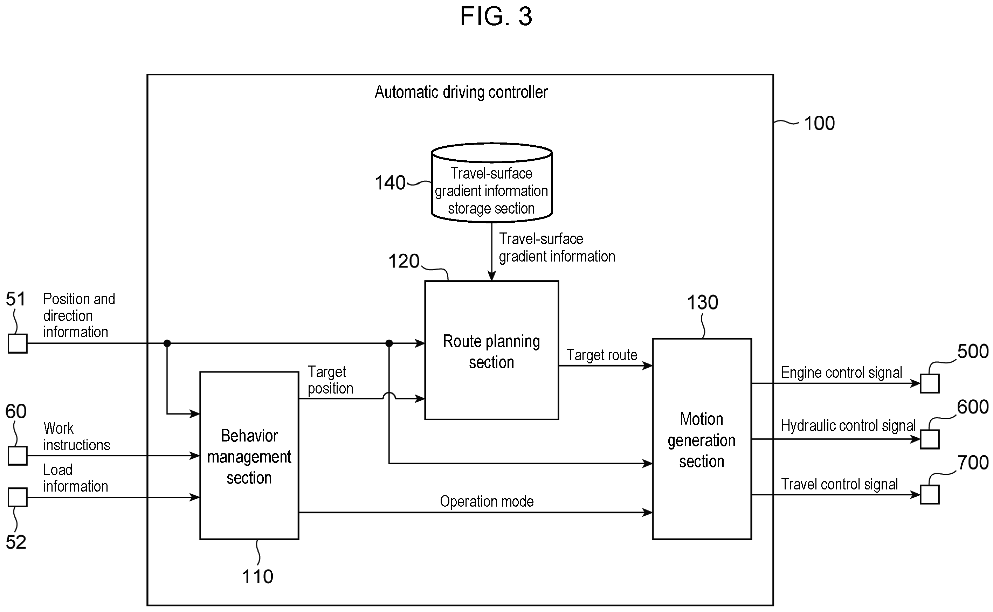

FIG. 3 is a functional block diagram of the automatic driving controller 100 according to an embodiment of the present invention. In FIG. 3, the automatic driving controller 100 includes a behavior management section 110, a route planning section 120, an operation generation section 130, and a travel-surface gradient information storage section 140.

The behavior management section 110 receives work instructions from the user interface 60, position and direction information from the positioning device 51, and load information from the load measuring device 52, determines the operation mode of the work machine, and sends it to the operation generation section 130, while calculating the target position and sending it to the route planning section 120. Here, the target position refers to each position and vehicle direction at the excavation position, the turnaround position when moving from the excavation position to the loading position, the loading position, and the turnaround position when moving from the loading position to the next excavation position.

The route planning section 120 receives the target position from the behavior management section 110, position and direction information from the positioning device 51, and travel-surface gradient information from the travel-surface gradient information storage section 140, calculates the target route (also called the travel route) from the current position to the target position, and sends it to the operation generation section 130.

The operation generation section 130 receives the operation mode from the behavior management section 110, the target route from the route planning section 120, and position and direction information from the positioning device 51, generates the travel operation of the wheel loader V1 so that the current position information of the wheel loader V1 aligns with the target route, and generates work operations of the bucket 1 such as excavation, loading, and unloading according to the operation mode, sending them as travel control signals and hydraulic control signals to the travel controller 700 and the hydraulic controller 600, respectively. Additionally, the operation generation section 130 calculates the necessary engine speed from the travel operation and work operation, and sends it as an engine control signal to the engine controller 500. For example, similar to conventional manual operation, the travel control signal may be the pedal operation amount of the accelerator and brake, the steering amount of the steering wheel, and the switching signal of the forward/reverse switch, and the hydraulic control signal may be the lever operation amount of the lift arm 2 and the bucket 1.

The travel-surface gradient information storage section 140 stores the road-surface gradient information (travel-surface gradient information) of the road surface on which the wheel loader V1 travels and outputs it to the route planning section 120. The travel-surface gradient information stored by the travel-surface gradient information storage section 140 is, for example, in map format and includes information on vectors representing the position, magnitude, and direction of the travel-surface gradient (hereinafter referred to as travel-surface gradient vectors).

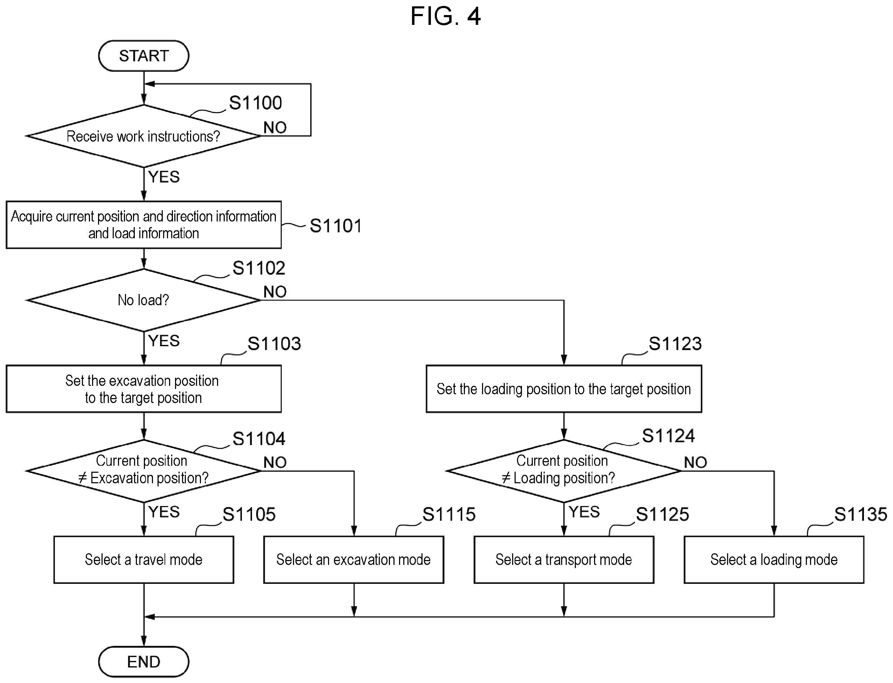

FIG. 4 is a flowchart showing the processing performed by the behavior management section 110. In FIG. 4, first, in step S1100, it is confirmed whether work instructions sent from the user interface 60 have been received, and if so, the process proceeds to step S1101. The work instructions include information such as the excavation position for excavating earth and sand, the loading position for loading the excavated earth and sand into a dump truck, and the weight of the load to be loaded into the bucket 1.

In step S1101, current position and direction information is acquired from the positioning device 51, and load information is acquired from the load measuring device 52, and the process proceeds to step S1102.

From step S1102 onwards, the process involves selecting the target position and operation mode based on the load information and current position and direction information. First, in step S1102, it is confirmed whether there is a load based on the load information acquired from the load measuring device 52, and if not, the process proceeds to step S1103, and if so, to step S1123.

In steps S1103 and S1123, the excavation position and loading position are set as the target positions, respectively, and the process proceeds to steps S1104 and S1124.

In step S1104, it is confirmed whether the current position of the work machine acquired from the positioning device 51 is equal to the excavation position information included in the work instructions, and if true, the process proceeds to S1105, and if false, to S1115. Note that the position comparison in this step may be made based on whether the current position is within a predetermined range of the excavation position.

In step S1105, the travel mode is selected as the operation mode. This allows the wheel loader V1 to execute the travel operation with the target position as the excavation position.

Similarly, in step S1115, the excavation mode is selected as the operation mode. This allows the wheel loader V1 to execute the excavation operation with the target position as the excavation position.

In step S1124, it is confirmed whether the current position of the work machine acquired from the positioning device 51 is equal to the loading position information included in the work instructions, and if true, the process proceeds to S1125, and if false, to S1135. Note that the position comparison in this step may be made based on whether the current position is within a predetermined range of the loading position.

In step S1125, the transport mode is selected as the operation mode. This allows the wheel loader V1 to execute the transport operation with the target position as the loading position.

Similarly, in step S1135, the loading mode is selected as the operation mode. This allows the wheel loader V1 to execute the loading operation with the target position as the loading position.

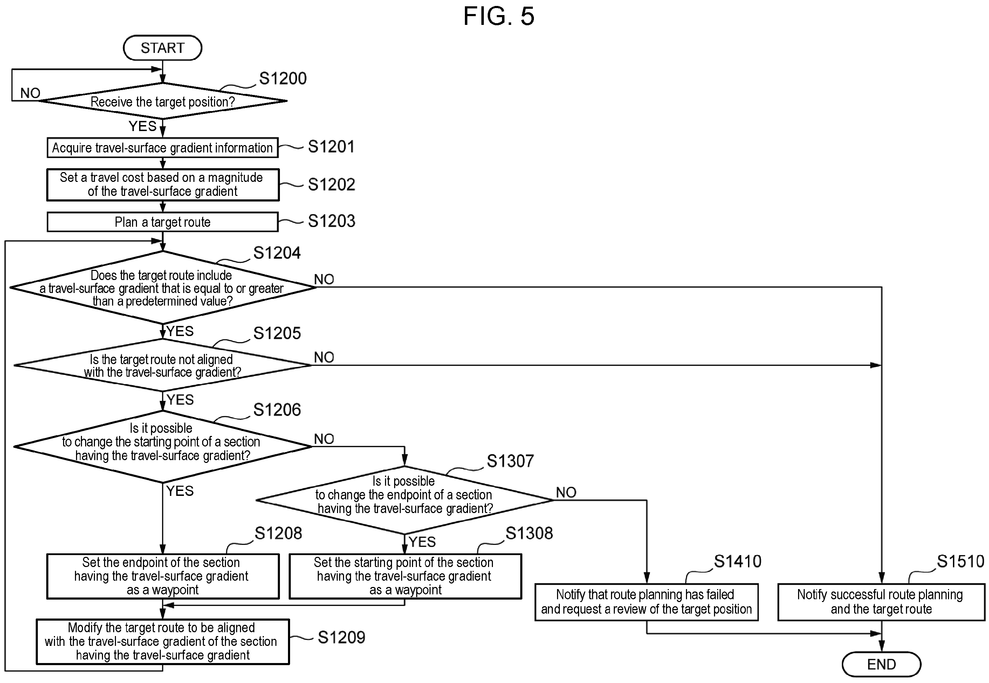

FIG. 5 is a flowchart showing the processing performed by the route planning section 120. In FIG. 5, first, in step S1200, it is confirmed whether the target position sent from the behavior management section 110 has been received, and if so, the process proceeds to step S1201.

In step S1201, travel-surface gradient information is acquired from the travel-surface gradient information storage section 140. The travel-surface gradient information includes information on the position, direction, and magnitude of the travel-surface gradient (travel-surface gradient vector).

In step S1202, the travel cost is set based on a magnitude of the travel-surface gradient. The travel cost is one of the indices used in route planning algorithms such as the potential method, where the travel area is subdivided into a grid, and cost is set as information representing the ease (or difficulty) of travel for each grid, allowing the calculation of the total cost of the route passing through the grid. Generally, to plan a route that reaches the target position while avoiding obstacles, grids that correspond to obstacles and their surroundings are set with high costs. In this step, in addition to conventional obstacles, the travel cost of grids corresponding to steep travel-surface gradients is set high.

In step S1203, using the travel cost set in step S1202, a target route from the current position to the target position is planned using a potential method such as the Dijkstra method, and the process proceeds to step S1204.

In step S1204, it is determined whether the planned target route includes a travel-surface gradient equal to or greater than a predetermined value, and if true, the process proceeds to step S1205, and if false, to step S1510. In other words, based on a magnitude of the travel-surface gradient included in the planned target route, it is determined whether to proceed with the processing from step S1205 onwards.

In step S1205, it is determined whether the planned target route is not aligned with the travel-surface gradient, and if true, the process proceeds to step S1206, and if false, to step S1510.

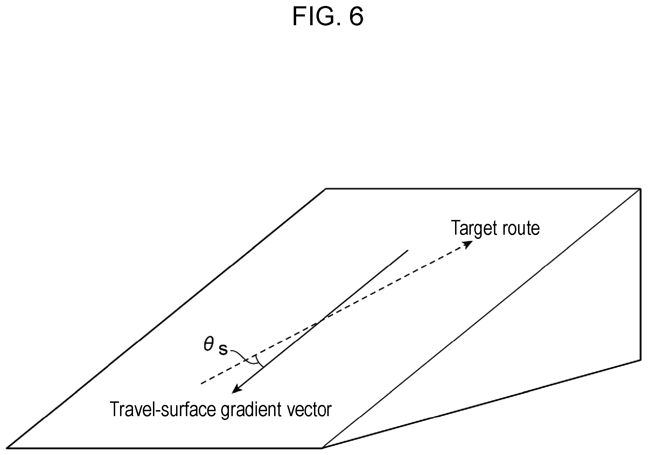

The specific method for determining whether the target route is aligned with the travel-surface gradient in step S1205 is explained using the relationship diagram of the travel-surface gradient vector and the target route shown in FIG. 6. The travel-surface gradient information stored by the travel-surface gradient information storage section 140 includes information on vectors representing the position, magnitude, and direction of the travel-surface gradient (travel-surface gradient vectors). When the direction of the travel-surface gradient vector and the direction of the target route are approximately aligned, it can be determined that the target route is aligned with the travel-surface gradient. In this embodiment, if the angle (angle difference) θₛ between the direction of the target route and the direction of the travel-surface gradient vector is equal to or smaller than a predetermined value, it is determined that the target route is aligned with the travel-surface gradient, and the process proceeds to step S1510. Conversely, if the angle (angle difference) θₛ between the direction of the target route and the direction of the travel-surface gradient vector is greater than the predetermined value, it is determined that the target route is not aligned with the travel-surface gradient, and the process proceeds to step S1206.

In step S1206, it is determined whether it is possible to change the starting point of the section having a travel-surface gradient (a section of a predetermined length on the target route) in the target route, which has a travel-surface gradient equal to or greater than a predetermined value and is not aligned with the travel-surface gradient, so that the target route is aligned with the travel-surface gradient. For example, by comparing the road width at the starting point of the section having the travel-surface gradient with the vehicle width of the wheel loader V1, if it is possible in the direction where the θₛ of the section having the travel-surface gradient becomes smaller, it is determined that it is possible to change the starting point of the section having the travel-surface gradient, and the process proceeds to step S1208. If it is determined that there is no possibility to change the starting point of the section having the travel-surface gradient, the process proceeds to step S1307.

In step S1307, using the same method as in step S1206, it is determined whether it is possible to change the endpoint of the section having the travel-surface gradient in the direction where the θₛ of the section having the travel-surface gradient becomes smaller, and if it is possible to change the endpoint of the section having the travel-surface gradient, the process proceeds to step S1308, and if there is no possibility to change the endpoint of the section having the travel-surface gradient, the process proceeds to step S1410.

In step S1208, in the section having the travel-surface gradient where it is possible to change the starting point, the endpoint of the section having the travel-surface gradient is set as a waypoint, and the process proceeds to step S1209.

Similarly, in step S1308, in the section having the travel-surface gradient where it is possible to change the endpoint, the starting point of the section having the travel-surface gradient is set as a waypoint, and the process proceeds to step S1209.

In step S1209, the target route is modified to pass through the set waypoint and be aligned with the travel-surface gradient of the section having the travel-surface gradient (the angle θₛ between the direction of the target route and the direction of the travel-surface gradient vector is equal to or smaller than the predetermined value), and the process returns to step S1204. In other words, by setting either the starting point or the endpoint of the section having the travel-surface gradient as a waypoint, the target route is modified to pass through the set waypoint and be aligned with the travel-surface gradient of the section having the travel-surface gradient (the angle θₛ between the direction of the target route and the direction of the travel-surface gradient vector is equal to or smaller than the predetermined value). The method for modifying the target route will be described later.

In step S1510, it is determined that the target route does not include a travel-surface gradient that is equal to or greater than a predetermined value (false in S1204), or that the target route includes a travel-surface gradient that is equal to or greater than a predetermined value but the target route is aligned with the travel-surface gradient (false in S1205), and successful route planning and the planned target route are transmitted (notified) to the user interface 60 and the operation generation section 130.

In step S1410, since the target route could not be modified to be aligned with the travel-surface gradient that is equal to or greater than a predetermined value included in the target route (false in S1206 and S1307), route planning failure and a request for a review of the target position are transmitted (notified) to the user interface 60.

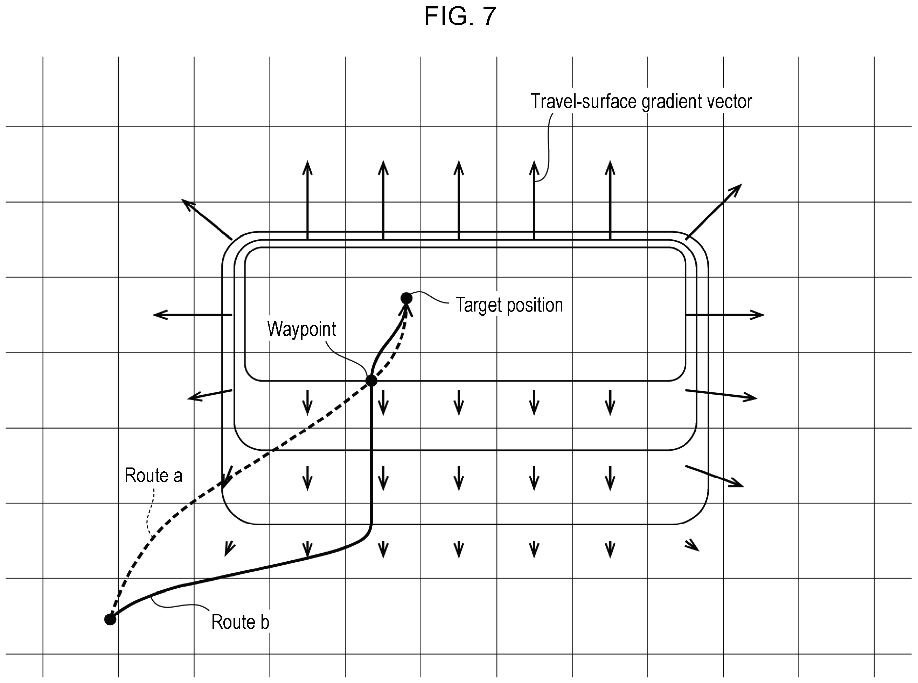

Next, the method for modifying the target route performed in step S1209 will be described using FIG. 7.

FIG. 7 is a schematic diagram showing the travel-surface gradient vector and the target route. In FIG. 7, the solid lines represent contour lines, and the arrows extending from the center of each grid represent travel-surface gradient vectors. The travel-surface gradient vector represents the direction of the travel-surface gradient at that position with the direction of the arrow, and the magnitude of the travel-surface gradient with the length (magnitude) of the arrow.

The route (route a) planned by conventional route planning methods that do not consider the travel-surface gradient indicated by the dotted arrows is basically a route planned to shorten the route length to the target position while avoiding obstacles. Therefore, a route that is not aligned with the travel-surface gradient is planned.

The route (route b) indicated by the solid arrows is a route where the endpoint of the section having the travel-surface gradient and the intersection of the route are set as waypoints, and the starting point of the section having the travel-surface gradient is set as a waypoint so that the direction of the target route in the section having the travel-surface gradient is aligned with the direction of the travel-surface gradient vector (the angle θₛ formed by them is equal to or smaller than a predetermined value). Note that here, the endpoint of the section having the travel-surface gradient is set as a waypoint, but as shown in the aforementioned steps S1206 and S1307, if there is no possibility to change the starting point of the section having the travel-surface gradient, the starting point of the section having the travel-surface gradient can be set as a waypoint, and the endpoint of the section having the travel-surface gradient can be changed to align with the direction of the travel-surface gradient vector.

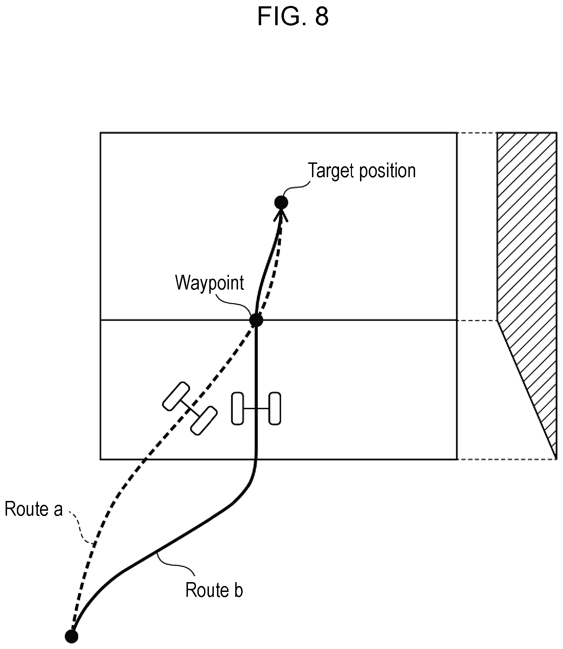

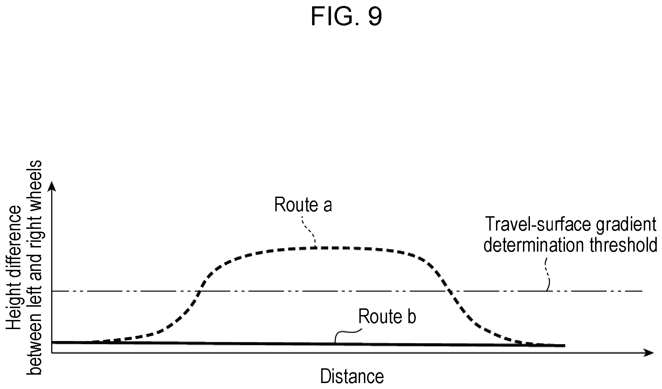

Next, using FIGS. 8 and 9, another example of the method for determining alignment of the target route with the travel-surface gradient performed in step S1205 will be described. The difference from the direct facing determination method using the angle θₛ between the direction of the travel-surface gradient vector and the direction of the target route (FIG. 6) is the use of the height difference between the left and right wheels of the wheel loader V1 (at least one pair of left and right wheels) (for example, between the centers of the left and right wheels). FIG. 8 is a diagram schematically showing the route in the section having the travel-surface gradient, and FIG. 9 is a diagram schematically showing the transition of the height difference between the left and right wheels of the wheel loader V1 during route travel.

Similar to FIG. 7, the route (route a) indicated by the dotted arrows is an example of a route planned by conventional route planning methods that do not consider the travel-surface gradient, so the route is planned to shorten the route length to the target position while avoiding obstacles. This route a is not aligned with the travel-surface gradient, that is, it enters diagonally with respect to the travel-surface gradient, so as shown in FIG. 9, a height difference occurs between the left and right wheels of the wheel loader V1 during slope travel. If the height difference between the left and right wheels is greater than or equal to the travel-surface gradient determination threshold, it is determined that the target route is not aligned with the travel-surface gradient (step S1205 in FIG. 5), and the section having the travel-surface gradient is subject to modification. For the specific method of modifying the target route, the same procedure as the method shown in the description of FIG. 7 is used, where either the starting point or the endpoint of the section having the travel-surface gradient is set as a waypoint, and the other is set as a waypoint so that the height difference between the left and right wheels of the wheel loader V1 becomes less than or equal to the travel-surface gradient determination threshold. The route (route b) indicated by the solid arrows is a target route modified so that the height difference between the left and right wheels of the wheel loader V1 becomes less than or equal to the travel-surface gradient determination threshold, with the endpoint of the section having the travel-surface gradient set as a waypoint.

As described above, by planning the target route to be aligned with the travel-surface gradient, it is possible to prevent the behavior of the vehicle body from becoming unstable during slope travel.

### [Summary]

As described above, the controller (automatic driving controller 100) of the work machine (wheel loader V1) in this embodiment plans a target route, which is a travel route to the target position (in other words, a travel route to move the work machine from the current position to the target position) set by the behavior management section 110, and is a controller for a work machine that automatically travels by following the planned target route. The controller includes a route planning section 120 that plans the target route based on the current position of the work machine and the target position obtained by the positioning device 51, and the route planning section 120 modifies the target route based on the travel-surface gradient on the target route.

The route planning section 120 modifies the target route based on the angle difference (angle θₛ) between the direction of the target route and the direction of the travel-surface gradient on the target route.

The route planning section 120 modifies the target route so that the angle difference (angle θₛ) between the direction of the target route and the direction of the travel-surface gradient on the target route is equal to or smaller than a predetermined value (so that the target route is aligned with the travel-surface gradient) (after step S1205).

The route planning section 120 determines whether to modify the target route based on a magnitude of the travel-surface gradient on the target route (step S1204).

The route planning section 120 determines whether the angle difference (angle θₛ) between the direction of the target route and the direction of the travel-surface gradient on the target route exceeds a predetermined value (whether the target route is not aligned with the travel-surface gradient) (step S1205), and if it is determined that the angle difference exceeds the predetermined value (the target route is not aligned with the travel-surface gradient) (true in step S1205), it sets either the starting point or the endpoint of the section having the travel-surface gradient as a waypoint (steps S1208, S1308), and modifies the target route so that the waypoint is passed and the angle difference is equal to or smaller than the predetermined value (the target route is aligned with the travel-surface gradient in the section having the travel-surface gradient) (step S1209).

The travel-surface gradient information on the target route includes a travel-surface gradient vector containing information on the position, direction, and magnitude of the travel-surface gradient, and the route planning section 120 determines whether the angle difference (angle θₛ) between the direction of the target route and the direction of the travel-surface gradient on the target route exceeds a predetermined value (whether the target route is not aligned with the travel-surface gradient) based on the comparison between the direction of the target route and the direction of the travel-surface gradient vector (FIG. 6) (step S1205), and if it is determined that the angle difference exceeds the predetermined value (the target route is not aligned with the travel-surface gradient) (true in step S1205), it sets either the starting point or the endpoint of the section having the travel-surface gradient as a waypoint (steps S1208, S1308), and modifies the target route so that the waypoint is passed and the angle difference is equal to or smaller than the predetermined value (the target route is aligned with the travel-surface gradient in the section having the travel-surface gradient) (step S1209).

The work machine has at least one pair of left and right wheels, and the route planning section 120 determines whether the angle difference (angle θₛ) between the direction of the target route and the direction of the travel-surface gradient on the target route exceeds a predetermined value (whether the target route is not aligned with the travel-surface gradient) based on the comparison between the height difference of the pair of left and right wheels and the preset travel-surface gradient determination threshold (FIG. 9) (step S1205), and if it is determined that the angle difference exceeds the predetermined value (the target route is not aligned with the travel-surface gradient) (true in step S1205), it sets either the starting point or the endpoint of the section having the travel-surface gradient as a waypoint (steps S1208, S1308), and modifies the target route so that the waypoint is passed and the angle difference is equal to or smaller than the predetermined value (the target route is aligned with the travel-surface gradient in the section having the travel-surface gradient) (step S1209).

The route planning section 120 determines whether to modify the target route based on a magnitude of the travel-surface gradient on the target route (step S1204).

The controller includes an operation generation section 130 that generates control signals to make the work machine travel by following the target route planned by the route planning section 120, and the route planning section 120 determines whether the target route includes the travel-surface gradient that is equal to or greater than a predetermined magnitude (step S1204), and if it is determined that the target route includes the travel-surface gradient that is equal to or greater than a predetermined magnitude (true in step S1204), it determines whether the angle difference (angle θₛ) between the direction of the target route and the direction of the travel-surface gradient exceeds a predetermined value (whether the target route is not aligned with the travel-surface gradient) (step S1205), and if it is determined that the angle difference exceeds the predetermined value (the target route is not aligned with the travel-surface gradient) (true in step S1205), it sets either the starting point or the endpoint of the section having the travel-surface gradient as a waypoint (steps S1208, S1308), and modifies the target route so that the waypoint is passed and the angle difference is equal to or smaller than the predetermined value (the target route is aligned with the travel-surface gradient in the section having the travel-surface gradient) (step S1209), and if it is determined that the target route does not include the travel-surface gradient that is equal to or greater than a predetermined magnitude (false in step S1204), or if it is determined that the target route includes the travel-surface gradient that is equal to or greater than a predetermined magnitude and the angle difference does not exceed the predetermined value (is equal to or smaller than the predetermined value) (the target route is aligned with the travel-surface gradient) (false in step S1205), it outputs to the operation generation section 130 without modifying the target route (as the final target route) (step S1510).

Additionally, the work machine is equipped with an articulated (bending type) steering mechanism.

According to this embodiment, it is possible to stably travel on slopes, thereby preventing the vehicle body from becoming unstable when traveling on routes that include slopes.

The above has detailed the embodiments of the present invention, but the present invention is not limited to the embodiments described above and includes various modifications. For example, the embodiment described above applies the present invention to a wheel loader, but the application of the present invention is not limited to this and can also be applied to a work machine such as dump trucks. Furthermore, the embodiment described above is detailed to clearly explain the present invention and is not necessarily limited to including all the configurations described.

Additionally, the above configurations, functions, processing units, processing means, etc., may be realized in hardware by designing some or all of them, for example, as integrated circuits. Moreover, the above configurations and functions may be realized in software by having a processor interpret and execute programs that implement each function. Information such as programs, tables, and files that implement each function can be stored in memory, storage devices like hard disks and SSDs (Solid State Drives), or recording media such as IC cards, SD cards, and DVDs.

Furthermore, the control lines and information lines shown are those considered necessary for explanation and do not necessarily represent all control and information lines in the product. In practice, it may be considered that almost all configurations are interconnected.

### Reference Signs List

1: bucket, 2: lift arm, 3: bell crank, 4: bucket link, 51: positioning device, 52: load measuring device, 60: user interface, 100: automatic driving controller (controller), 110: behavior management section, 120: route planning section, 130: motion generation section, 140: travel-surface gradient information storage section, 500: engine controller, 600: hydraulic controller, 700: travel controller, V1: wheel loader (work machine)

## Claims

1. A controller for a work machine that plans a target route, which is a travel route to a target position, and causes the work machine to automatically travel along the planned target route,
wherein the controller comprising:
a route planning section configured to plan the target route based on a current position of the work machine and the target position, and
the route planning section is configured to modify the target route based on information about a travel-surface gradient on the target route.

2. The controller for the work machine according to claim 1, wherein
the route planning section is configured to modify the target route based on an angle difference between a direction of the target route and a direction of a travel-surface gradient on the target route.

3. The controller for the work machine according to claim 2, wherein
the route planning section is configured to modify the target route such that an angle difference between a direction of the target route and a direction of a travel-surface gradient on the target route is equal to or less than a predetermined value.

4. The controller for the work machine according to claim 2, wherein
the route planning section is configured to determine whether to modify the target route based on a magnitude of the travel-surface gradient on the target route.

5. The controller for the work machine according to claim 1, wherein
the route planning section determines whether the angle difference between the direction of the target route and the direction of the travel-surface gradient on the target route exceeds a predetermined value, and if it is determined that the angle difference exceeds the predetermined value, the route planning section sets one of a start point and an end point of a section having the travel-surface gradient on the target route as a waypoint, and modifies the target route so as to pass through the waypoint and so that the angle difference is equal to or smaller than the predetermined value.

6. The controller for the work machine according to claim 5, wherein
information about the travel-surface gradient on the target route includes a travel-surface gradient vector, which includes information about a position, the direction, and a magnitude of the travel-surface gradient, and
the route planning section determines whether the angle difference exceeds the predetermined value based on a comparison between the direction of the target route and a direction of the travel-surface gradient vector.

7. The controller for the work machine according to claim 1, wherein
the work machine includes at least one pair of left and right wheels,
the route planning section determines, based on a comparison between a height difference of the pair of left and right wheels and a preset travel-surface gradient determination threshold, whether the angle difference between the direction of the target route and the direction of the travel-surface gradient on the target route exceeds a predetermined value, and if it is determined that the angle difference exceeds the predetermined value, the route planning section sets one of a start point and an end point of a section having the travel-surface gradient on the target route as a waypoint, and modifies the target route so as to pass through the waypoint and so that the angle difference is equal to or smaller than the predetermined value.

8. The controller for the work machine according to claim 5, wherein
the route planning section determines whether to modify the target route, based on a magnitude of the travel-surface gradient on the target route.

9. The controller for the work machine according to claim 8, further comprising:
a motion generation section that generates a control signal to cause the work machine to travel by following the target route planned by the route planning section, wherein
the route planning section determines whether the target route includes the travel-surface gradient that is equal to or greater than a predetermined magnitude,
if it is determined that the target route includes the travel-surface gradient equal to or greater than the predetermined magnitude, the route planning section determines whether the angle difference between the direction of the target route and the direction of the travel-surface gradient exceeds the predetermined value, and if it is determined that the angle difference exceeds the predetermined value, the route planning section sets one of the start point and the end point of the section having the travel-surface gradient on the target route as a waypoint, and modifies the target route so as to pass through the waypoint and so that the angle difference is equal to or smaller than the predetermined value, and
if it is determined that the target route does not include the travel-surface gradient that is equal to or greater than the predetermined magnitude, or if it is determined that the target route includes the travel-surface gradient that is equal to or greater than the predetermined magnitude but it is determined that the angle difference does not exceed the predetermined value, the route planning section outputs, without modifying, the target route to the motion generation section.

10. The controller for the work machine according to claim 1, wherein the work machine is a work machine equipped with an articulated steering mechanism.

## Amended claims

### Amended claims under Art. 19.1 PCT

1. A controller for a work machine that plans a target route, which is a travel route to a target position, and that automatically travels by following the planned target route, the controller comprising:
a route planning section configured to plan the target route based on a current position of the work machine and the target position, wherein
the route planning section is configured to modify the target route based on an angle difference between a direction of the target route and a direction of a travel-surface gradient on the target route.

2. The controller for the work machine according to claim 1, wherein
the route planning section modifies the target route so that the angle difference between the direction of the target route and the direction of the travel-surface gradient on the target route is equal to or smaller than a predetermined value.

3. The controller for the work machine according to claim 1, wherein
the route planning section determines whether to modify the target route based on a magnitude of the travel-surface gradient on the target route.

4. The controller for the work machine according to claim 1, wherein
the route planning section determines whether the angle difference between the direction of the target route and the direction of the travel-surface gradient on the target route exceeds a predetermined value, and if it is determined that the angle difference exceeds the predetermined value, the route planning section sets one of a start point and an end point of a section having the travel-surface gradient on the target route as a waypoint, and modifies the target route so as to pass through the waypoint and so that the angle difference is equal to or smaller than the predetermined value.

5. The controller for the work machine according to claim 5, wherein
information about the travel-surface gradient on the target route includes a travel-surface gradient vector, which includes information about a position, the direction, and a magnitude of the travel-surface gradient, and
the route planning section determines whether the angle difference exceeds the predetermined value based on a comparison between the direction of the target route and a direction of the travel-surface gradient vector.

6. The controller for the work machine according to claim 1, wherein
the work machine includes at least one pair of left and right wheels,
the route planning section determines, based on a comparison between a height difference of the pair of left and right wheels and a preset travel-surface gradient determination threshold, whether the angle difference between the direction of the target route and the direction of the travel-surface gradient on the target route exceeds a predetermined value, and if it is determined that the angle difference exceeds the predetermined value, the route planning section sets one of a start point and an end point of a section having the travel-surface gradient on the target route as a waypoint, and modifies the target route so as to pass through the waypoint and so that the angle difference is equal to or smaller than the predetermined value.

7. The controller for the work machine according to claim 5, wherein
the route planning section determines whether to modify the target route, based on a magnitude of the travel-surface gradient on the target route.

8. The controller for the work machine according to claim 8, further comprising:
a motion generation section that generates a control signal to cause the work machine to travel by following the target route planned by the route planning section, wherein
the route planning section determines whether the target route includes the travel-surface gradient that is equal to or greater than a predetermined magnitude,
if it is determined that the target route includes the travel-surface gradient that is equal to or greater than the predetermined magnitude, the route planning section determines whether the angle difference between the direction of the target route and the direction of the travel-surface gradient exceeds the predetermined value, and if it is determined that the angle difference exceeds the predetermined value, the route planning section sets one of the start point and the end point of the section having the travel-surface gradient on the target route as a waypoint, and modifies the target route so as to pass through the waypoint and so that the angle difference is equal to or smaller than the predetermined value, and
if it is determined that the target route does not include the travel-surface gradient that is equal to or greater than the predetermined magnitude, or if it is determined that the target route includes the travel-surface gradient that is equal to or greater than the predetermined magnitude but it is determined that the angle difference does not exceed the predetermined value, the route planning section outputs, without modifying, the target route to the motion generation section.

9. The controller for the work machine according to claim 1, wherein the work machine is a work machine equipped with an articulated steering mechanism.
